# EUROPÄISCHE PATENTSCHRIFT

(11) **EP 1 994 594 B1**
(45) Veröffentlichungstag und Bekanntmachung des Hinweises auf die Patenterteilung: **07.04.2010**
(21) Anmeldenummer: 07712331.3
(22) Anmeldetag: 27.02.2007
(51) Int. Cl.: H01M 8/02, H01M 8/04, H01M 8/12, H01M 8/24

(54) **BRENNSTOFFZELLENANORDNUNG**
FUEL CELL ARRANGEMENT
SYSTEME DE CELLULES A COMBUSTIBLE

(30) Priorität: 27.02.2006 DE 202006003108 U
(43) Veröffentlichungstag der Anmeldung: 26.11.2008
(73) Patentinhaber: Highterm Research GmbH, 85276 Hettenshausen (DE)
(72) Erfinder: KARL, Jürgen, 85229 Markt Indersdorf (DE); FRANK, Nadine, 80337 München (DE); HESS, Christoph, 80799 München (DE)
(74) Vertreter: Winter, Brandl, Fürniss, Hübner Röss, Kaiser, Polte Partnerschaft Patent- und Rechtsanwaltskanzlei
(86) Internationale Anmeldenummer: PCT/EP2007/051841
(87) Internationale Veröffentlichungsnummer: WO 2007/099095

(56) Entgegenhaltungen:
- WO-A-99/17390
- WO-A-2004/082055
- WO-A-2005/078842
- WO-A1-2005/057701
- DE-A1- 2 160 359
- DE-A1- 10 352 656
- DE-A1- 19 838 652
- US-A- 3 527 689
- US-A1- 2004 023 101
- US-B1- 6 506 511
- US-B1- 6 684 948

## Beschreibung

Die vorliegende Anmeldung geht zurück auf die deutsche Gebrauchsmusteranmeldung Nr. DE 20 2006 003 108, deren Prioritätsrecht sie beansprucht.

Die Erfindung betrifft eine Brennstoffzellenanordnung, insbesondere mit einer oder mehreren rohrförmigen oder tubulären Brennstoffzellen.

Sowohl in den Industrienationen als auch besonders in Entwicklungs-und Schwellenländern steigt der Gesamtenergiebedarf. Um die heutige Lebensqualität für nachkommende Generationen zu erhalten, muss die zukünftige Energieerzeugung wirtschaftlich und zusätzlich CO₂-neutral und emissionsarm sein. Da fossile flüssige und gasförmige Brennstoffe teuer und in ihrer Reichweite begrenzt sind, werden günstigere Festbrennstoffe mit entsprechenden Eigenschaften gesucht. Ein solcher Brennstoff ist Biomasse, die aufgrund der hohen Transportkosten pro Energieeinheit überwiegend dezentral eingesetzt wird. Auch andere Phänomene, wie z.B. die mangelnde Akzeptanz von Großkraftwerken und die veränderte Struktur des Energiemarktes, begünstigen die dezentrale Energieerzeugung. Die heute verwendeten Lösungen zur Energieproduktion mit Hilfe von Biomasse sind auf Basis von Biomasse oder Biogas betriebene Blockheizkraftwerke. Die Wirkungsgrade werden durch die geringe Anlagengröße und den Carnot-Prozeß eingeschränkt. Es gibt jedoch eine alternative Lösung, die inzwischen in technisch greifbare Nähe rückt: Die Kombination eines allothermen Biomassevergasers mit Hochtemperatur-Brennstoffzellen.

Aus der DE 198 38 652 C2 ist ein Verfahren zum Auskoppeln von Wärme aus einer plattenförmigen Brennstoffzelle bekannt, bei dem ein Wärmetransportmedium einen Phasenwechsel durchläuft. Hierbei sind die Kanäle, in denen das Wärmetransportmedium zirkuliert in die Strömungskanäle für Brenngas bzw. Oxidationsmittel integriert.

Die Anmelderin verfügt über einen Biomassevergaser, genannt BioHPR (für engl. *"Biomass Heat Pipe Reformer"*)*,* der durch Wärmerohre (engl. *"Heat Pipes"*) geheizt wird. Es hat sich die Überlegung ergeben, einen solchen BioHPR mit Festoxid-Brennstoffzellen, genannt SOFC (für engl. *"Solid Oxide Fuel Cells"*) zu kombinieren. SOFC sind dafür besser geeignet als andere Brennstoffzellenarten, da sie einerseits Abwärme in der richtigen Temperatur von über 900°C bereitstellen und am besten mit biogenen Gasen arbeiten können, ohne Schäden davonzutragen (vgl. James Larminie, Andrew Dicks: Fuel Cell Systems Explained, SAE International; 2. Auflage, Mai 2003).

Ein BioHPR vergast Biomasse unter Zufuhr von Wärme zu Wasserstoff, Kohlenmonoxid, Schwefel und andere Komponenten. Das Produktgas muss von Komponenten, welche die Brennstoffzellen beschädigen können, wie z.B. Schwefel und Staub, gereinigt werden, sodass den Brennstoffzellen nur Wasserstoff, Kohlenmonoxid, Methan und andere unschädliche Gase zugeführt werden. Durch die Heat Pipes können große Wärmemengen auf einfache Weise transportiert werden. Die thermische Verbindung, die zwischen den beiden Komponenten hergestellt werden muss, kann die Gesamtperformance entscheidend beeinflussen.

Ferner ziehen die endothermen Reformierungsreaktionen, die an der SOFC-Anode stattfinden, Wärme aus der unmittelbaren Umgebung ab. Dies kann zu einer lokalen Temperaturabsenkung und als Folge zu einer Verringerung der katalytisch aktiven Nickelatome führen. Schließlich führt dies auch zu einer Ablagerung von Kohlenstoff aus den Teerbestandteilen des Brenngases. Die Kohlenstoffablagerungen verringern die Gasdurchlässigkeit der Anode. Der Abschnitt der Brennstoffzelle ist weniger aktiv und produziert daher auch weniger Wärme. Deshalb werden auch die Reformierungsreaktionen nicht mehr an dieser Stelle stattfinden, sondern erst an der nächsten intakten Oberfläche der Zelle. Die Schädigung verschiebt sich also in Richtung des Gasflusses, damit wird nach und nach die gesamte Zelle verstopft und damit unbrauchbar. Die Blockierung der Zelle kann verhindert werden, wenn die Temperatur von außen, unabhängig von der Funktion der Brennstoffzelle, auf einem hohen Niveau gehalten wird.

Aus der Wo 2004/082055 A1 ist eine Brennstoffzellenanordnung bekannt, die eine Kathode, ein Elektrolyt und eine Anode sowie Strömungskanäle für Oxidationsmittel und/oder Brenngas umfasst. Die einzelnen Brennstoffzellen sind in einer gemeinsamen Brennstoffzellenhülle angeordnet, die Perforationen aufweist, durch welche Brennstoff oder Oxidationsmittel zugeführt wird. Eine Temperaturregelung ist nicht vorgesehen.

Es ist demnach eine Aufgabe der vorliegenden Erfindung, eine Brennstoffzellenanordnung bereitzustellen, bei der die thermische Verbindung zwischen Elementen einer oder mehrerer Brennstoffzellen und einem Wärmetransportmedium, insbesondere zur Verwendung in einem Biomassevergaser, optimiert ist und so gestaltet ist, dass die Temperatur entlang einer Brennstoffzellenanordnung auf möglichst gleichmäßig hohem Niveau gehalten werden.

Die Lösung dieser Aufgaben erfolgt durch die Merkmale des Anspruchs 1.

Die Anordnung der Elemente einer Brennstoffzelle in einem Wärmetauscherbehälter, in dem ein Wärmetransportmedium zirkuliert, welches von der als Wärmetauscherfläche dienenden Brennstoffzellenhülle Abwärme der Brennstoffzelle aufnimmt und so für die Regulierung der Betriebstemperatur der Brennstoffzelle sorgt, ermöglicht es, lokale Temperaturunterschiede auf einzelne Brennstoffzellen insbesondere im Bereich der Zuführung des Brenngases auszugleichen.

Gemäß einer bevorzugten Ausführungsform der Erfindung nach Anspruch 3 durchläuft das Wärmetransportmedium in dem gemeinsamen Wärmetauscherbehälter während des Wärmetransports einen Phasenwechsel, wobei das Wärmetransportmedium durch Verdampfung Abwärme von der Brennstoffzellenhülle aufnimmt und in kühleren Bereichen (Wärmesenke) des Wärmetauscherbehälters durch Kondensation wieder abgibt, und wobei der Wärmetauscherbehälter Teil einer Wärmerohranordnung ist. Hierdurch wird zum einen ein effektiver Wärmetransport und zum andern eine bestimmte gewünschte Betriebstemperatur erreicht, wenn der Phasenwechsel bei der gewünschten Betriebstemperatur erfolgt. Ferner ergeben sich Möglichkeiten zur Kopplung der Brennstoffzellen etwa mit einem wärmerohrgeheizten Biomassevergaser. Als Wärmetransportmedium kann Natrium verwendet werden.

Gemäß einer bevorzugten Ausführungsform der Erfindung nach Anspruch 4 sind die Hüllen der Brennstoffzellen mit einer Kapillarstruktur versehen, was zu einer vollständigen Benetzung mit Wärmetransportmedium führt. Hierdurch wird der Wärmeübergang von der Brennstoffzellenhülle auf das Wärmetransportmedium verbessert.

Gemäß einer bevorzugten Ausführungsform der Erfindung nach Anspruch 5 ist die Brennstoffzellenhülle rohrförmig und weist eine erste und eine zweite Stirnseite auf, wobei wenigstens eine der ersten und der zweiten Stirnseite der Brennstoffzellenhülle aus dem Wärmetauscherbehälter herausragt. Die Brennstoffzellen sind normalerweise vollständig innerhalb des Wärmetauscherbehälters enthalten. Bei sehr langen Brennstoffzellen kann es vorteilhaft sein, wenn wenigstens eine der Stirnseiten aus dem Wärmetauscherbehälter herausragt, um Zuführung, Kontaktierung und Abdichtung in den kalten Bereich zu legen.

Gemäß einer bevorzugten Ausführungsform der Erfindung nach Anspruch 6 sind mehrere Brennstoffzellen mit Brennstoffzellenhülle oder eine Mehrzahl von Brennstoffzellenhüllen mit jeweils wenigstens einer Brennstoffzelle in einem gemeinsamen Wärmetauscherbehälter angeordnet. Es können Brennstoffzellen sowohl hintereinander in Reihe als Brennstoffzellensäule wie auch nebeneinander in dem gemeinsamen Wärmetauscherbehälter angeordnet sein. Dadurch werden eine modulare Bauweise der Brennstoffzellenanordnung und ein Austausch defekter Module möglich.

Gemäß einer bevorzugten Ausführungsform der Erfindung nach Anspruch 7 weist die Brennstoffzellenanordnung eine Einrichtung zum Beaufschlagen von mechanischem Druck auf die hintereinander angeordneten Brennstoffzellen einer Brennstoffzellensäule auf, um den erforderlichen Kontaktdruck zur elektrischen Verbindung und Abdichtung der hintereinander angeordneten und in Reihe geschalteten Brennstoffzellen zu gewährleisten.

Gemäß einer bevorzugten Ausführungsform der Erfindung nach Anspruch 8 ist die Brennstoffzelle rohrförmig oder stabförmig und weist zwei Stirnseiten, eine sich zwischen den beiden Stirnseiten erstreckende Rohrwandung, eine Kathode und eine Anode, die sich in der Rohrwandung jeweils insbesondere mantelförmig erstrecken, einen dazwischen angeordneten Festelektrolyten, einen inneren Strömungskanal für Oxidationsmittel oder Brenngas und einen äußeren, die Rohrwandung umgebenden Strömungskanal für Brenngas oder Oxidationsmittel auf. Durch Anordnung von planen, jeweils eine Öffnung für den inneren Strömungskanal aufweisenden elektrischen Kontaktflächen auf den jeweiligen Stirnseiten können die elektrischen Kontaktflächen unmittelbar benachbarter Brennstoffzellen aufeinander gedrückt werden und so der elektrische Kontakt hergestellt werden. Durch die aufeinander liegenden elektrischen Kontaktflächen werden auch die Strömungskanäle für Brenngas und Oxidationsmittel gegeneinander abgedichtet.

Im Gegensatz zum Stand der Technik erfolgt die Abdichtung daher nicht durch Ineinanderschieben der Brennstoffzellen und in Richtung der Rohrwandung verlaufender Dichtflächen. Bei herkömmlichen SOFC-Brennstoffzellen ist die Abdichtung mit chemisch stabilen Dichtungen bei hohen Temperaturen ca. 900°C) unter reduzierenden und oxidierenden Bedingungen und gleichzeitige elektrische Isolierung sehr schwierig. So würde das Zusammentreffen von aus einer auch nur geringfügigen Undichtigkeit austretender Luft aus dem inneren Strömungskanal der Brennstoffzelle auf Brenngas im äußeren Strömungskanal zu einer heftigen Reaktion und einer lokalen Temperaturspitze führen, welche die Keramik aufgrund der auftretenden thermischen Spannungen zerstören würde. Werden die lokalen Temperaturspitzen jedoch durch Anordnung in einem Wärmetauscherbehälter, insbesondere in einer Wärmerohranordnung, weggekühlt, kann eine geringfügige Restundichtigkeit hingenommen werden, da sie nicht mehr zur Zerstörung der Keramik führen. Durch die Anordnung der abdichtenden elektrischen Kontaktflächen in radialer Richtung können unweigerlich auftretende thermische oder mechanische Spannungen nicht zum Bruch der Brennstoffzellen führen. Darüber hinaus wird durch das einfache Aufeinanderstapeln dieser Brennstoffzellen die Montage und Demontage bei Defekten vereinfacht. Außerdem sind die elektrischen Kontaktflächen plan, was die Herstellung und die Abdichtung zwischen dem inneren und dem äußeren Strömungskanal vereinfacht. Da ferner die elektrischen Kontaktflächen benachbarter Brennstoffzellen aufeinander liegen und damit elektrischen und mechanischen Kontakt miteinander aufweisen, stellen die elektrischen Kontaktflächen zum einen den elektrischen Kontakt zwischen Anode und Kathode benachbarter Brennstoffzellen her, und andererseits dichten sie den inneren oder die inneren Strömungskanäle gegen den äußeren Strömungskanal für Brenngas-/Oxidationsmittel ab.

Zur Verbesserung des inneren gegen den äußeren Strömungskanal können die elektrischen Kontaktflächen gemäß Anspruch 9 entsprechend geglättet sein, z. B. durch Schleifen oder Polieren.

Zwischen die elektrischen Kontaktflächen benachbarter Brennstoffzellen kann eine elektrisch leitende Schicht eingefügt werden, die zum einen dem elektrischen Kontakt zwischen den benachbarten elektrischen Kontaktflächen herstellt und zum anderen eine erhöhte Abdichtung zwischen dem inneren und äußeren Strömungskanal für Brenngas-/Oxidationsmittel ermöglicht.

Üblicherweise besteht die Kathode einer Brennstoffzelle aus leitender Keramik und besitzt daher eine geringere elektrische Leitfähigkeit als die Anode. Dadurch, dass die Schichtdicke der Kathode wesentlich größer ist als die Schichtdicke der Anode wird dies ausgeglichen (Anspruch 10).

Es ist darauf hinzuweisen, dass die Kathodenschicht aus zwei Schichten bestehen kann, wobei die erste Kathodenschicht unmittelbar an die Elektrolytschicht angrenzt und die zweite Kathodenschicht auf der dünneren ersten Kathodenschicht aufgebracht ist. Es ist von Vorteil, wenn zweite Kathodenschicht wesentlich dicker als die erste Kathodenschicht ist.

Gemäß bevorzugten Ausführungsformen der Erfindung nach Anspruch 11 bildet eine Stirnseite einer rohrförmigen Kathodenschicht die erste elektrische Kontaktfläche für die Kathode und bildet die andere Stirnseite der Anodenschicht die zweite elektrische Kontaktfläche für die Anode. In vorteilhafter Weise unterscheidet sich die Materialzusammensetzung der Kathode im Bereich der Stirnseite bzw. der ersten elektrischen Kontaktfläche von dem übrigen Kathodenbereich. Beispielsweise ist im Bereich der ersten elektrischen Kontaktfläche die elektrische Leitfähigkeit durch gezieltes Beimengen von Metall, z. B. Silber, vergrößert. Auch wird die Porosität im Bereich der elektrischen Kontaktfläche geringer sein als im übrigen Bereich der Kathode.

Alternativ ist es auch möglich, dass eine Stirnseite der rohrförmigen Kathodenschicht die erste elektrische Kontaktfläche für die Kathode bildet und die andere Stirnseite der Anodenschicht die zweite elektrische Kontaktfläche für die Anode bildet. In diesem Fall ist es aus den vorstehend genannten Gründen vorteilhaft, wenn sich die Materialzusammensetzung der Kathode im Bereich der Stirnseite bzw. der zweiten elektrischen Kontaktfläche von dem übrigen Kathodenbereich unterscheidet.

Gemäß einer bevorzugten Ausführungsform der Erfindung nach Anspruch 27 oder 33 kann die Porosität der zweiten Kathodenschicht so groß sein, dass sich darin sogar Gasströmungskanäle ergeben.

Gemäß einer bevorzugten Ausführungsform der Erfindung nach Anspruch 14 wird im zentralen Bereich des inneren Strömungskanals Material eingebracht, so dass der Gasstrom durch die Strömungskanäle in der Kathodenschicht gezwungen wird. Hierdurch wird die Kontaktfläche zwischen Kathode und Gas vergrößert.

Gemäß Anspruch20 weist die Brennstoffzelle eine Führungs- bzw. Zentriereinrichtung im Bereich der Stirnseite(n) auf. Die Zentriereinrichtung umfasst Elemente, die an den einzelnen Brennstoffzellen fest angeordnet sind, und ist auch als Abstandshalter zu in radialer Richtung nebeneinander angeordneten Brennstoffzellen ausgelegt. Dadurch lassen sich mehrere Brennstoffzellen leichter aneinander anordnen und ausrichten.

Die übrigen Unteransprüche beziehen sich auf weitere bevorzugte Ausgestaltungen der Erfindung.

Weitere Einzelheiten, Merkmale und Vorteile der Erfindung ergeben sich aus der nachfolgenden Beschreibung beispielhafter Ausführungsformen anhand der Zeichnungen. Es zeigt bzw. zeigen:

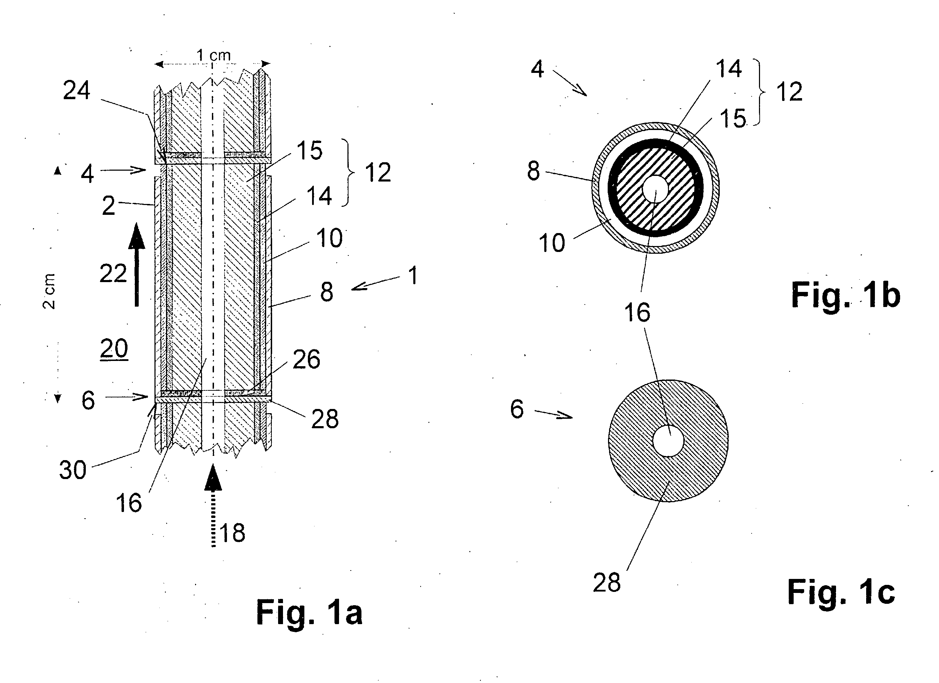

- Fig. 1 a: eine schematische Darstellung einer ersten beispielhaften Ausgestaltung einer Brennstoffzelle zur Anwendung in einer erfindungsgemäßen Brennstoffzellenanordnung;
- Fig. 1 b: eine Aufsicht auf die erste Stirnseite der Brennstoffzelle nach Fig. 1 a;
- Fig. 1 c: eine Aufsicht auf die zweite Stirnseite der Brennstoffzelle nach Fig. 1 a;
- Fig. 2a: eine schematische Darstellung einer zweiten beispielhaften Ausgestaltung einer Brennstoffzelle zur Anwendung in einer erfindungsgemäßen Brennstoffzellenanordnung;
- Fig. 2b: eine Aufsicht auf die erste Stirnseite der Brennstoffzelle nach Fig. 2a;
- Fig. 2c: eine Aufsicht auf die zweite Stirnseite der Brennstoffzelle nach Fig. 2a,
- Fig. 3a: eine schematische Darstellung einer beispielhafte Anordnung von Brennstoffzellen gemäß einer Abwandlung der Brennstoffzellen von Fig. 1 innerhalb einer gemeinsamen Umhüllung;
- Fig. 3b: eine entlang einer Linie IIIB-IIIB in Fig. 3a genommene Querschnittsansicht einer Brennstoffzelle von Fig. 3a einschließlich der Umhüllung und einer beispielhaften Zentriereinrichtung;
- Fig. 4: eine perspektivische Ansicht einer Abwandlung der Brennstoffzelle aus Fig. 1 mit einer anderen beispielhaften Zentriereinrichtung;
- Fig. 5: eine schematische Darstellung einer beispielhaften Anordnung von Brennstoffzellen gemäß einer weiteren Abwandlung der Brennstoffzellen von Fig. 1 mit einer weiteren beispielhaften Zentriereinrichtung;
- Fig. 6a: eine schematische Darstellung einer beispielhaften Anordnung von Brennstoffzellen gemäß der Erfindung, und Fign. 6b, 6c, 6d und 6e jeweils eine vergrößerte Ansicht eines Details "A" in Fig. 6a mit unterschiedlichen Varianten eines Kontaktbereichs zwischen einer Anode und einem Interkonnektor;
- Fig. 7: eine schematische Darstellung einer weiteren Abwandlung einer Brennstoffzelle gemäß der Erfindung;
- Fig. 8: eine schematische Darstellung einer Mehrzahl von Brennstoffzellensäulen in einem gemeinsamen Wärmetauscherbehälter gemäß der vorliegenden Erfindung,
- Fign. 9a und 9b: eine entsprechende schematische Darstellung einer Mehrzahl von Brennstoffzellensäulen in einem gemeinsamen Wärmetauscherbehälter gemäß der vorliegenden Erfindung, und
- Fig. 10: eine weitere Variante der Anordnung von Wärmetauschersäulen in einem gemeinsamen Wärmetauscherbehälter gemäß der vorliegenden Erfindung.

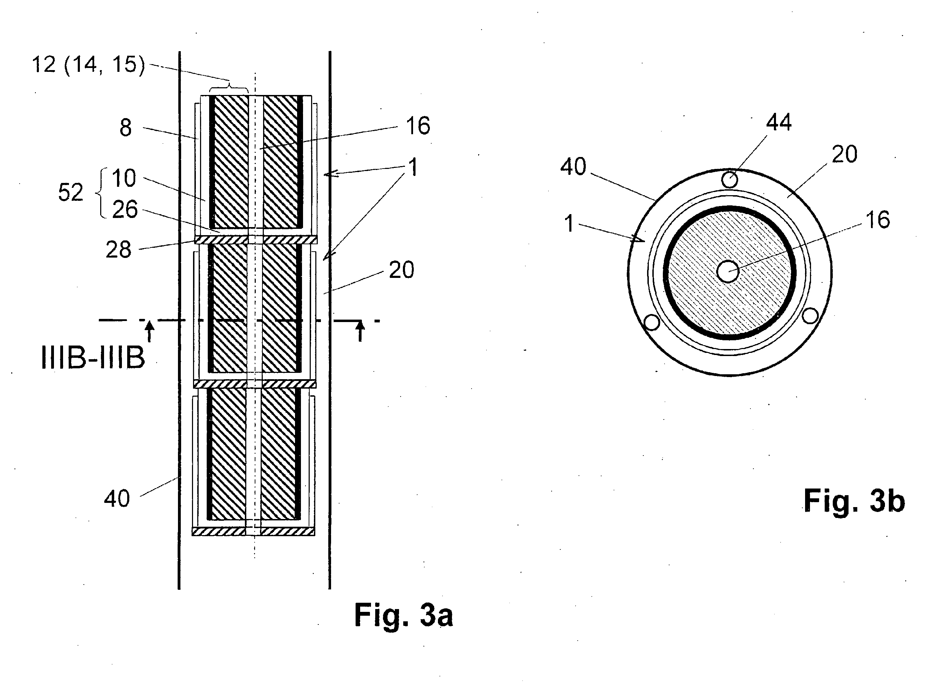

Die Fign. 1a, 1b und 1c zeigen schematisch ein erstes Beispiel einer Brennstoffzelle 1, die in einer erfindungsgemäßen Brennstoffzellenanordnung Anwendung findet. In Fig. 1a sind hierbei drei in Reihe aufeinander gestapelte Brennstoffzellen 1 gezeigt, wobei die obere und die untere Brennstoffzelle nur teilweise dargestellt sind. Der Aufbau der einzelnen Brennstoffzellen ist identisch und wird beispielhaft anhand der mittleren Brennstoffzelle 1 erläutert. Die Brennstoffzelle 1 umfasst eine kreisringförmige Rohrwandung 2 mit einer ersten, oberen Stirnseite 4 (in einer Aufsicht dargestellt in Fig. 1 b) und einer zweiten, unteren Stirnseite 6 (in einer Aufsicht dargestellt in Fig. 1c). Die Rohrwandung 2 umfasst von außen nach innen eine Anode oder Anodenschicht 8, gefolgt von einer Elektrolytschicht 10 und einer Kathodenschicht oder Kathode 12, die die innerste Schicht der Rohrwandung 2 darstellt. Kathode 12, Anode 8 und der Festelektrolyt 10 sind jeweils als Zylindermantel ausgebildet. Die Kathode 12 umfasst eine erste Kathodenschicht 14 aus Lanthan-Strontium-Manganoxid (LSM), die unmittelbar an die Elektrolytschicht 10 angrenzt, und eine an die erste Kathodenschicht 14 angrenzende zweite Kathodenschicht 15. Die zweite Kathodenschicht 15 grenzt unmittelbar an einen inneren Strömungskanal 16 an, in dem ein Oxidationsmittel 18, insbesondere Luft, der Kathode 12 zugeführt wird, wie durch einen gepunkteten Pfeil in Fig. 1a dargestellt. Die außen auf der Rohrwandung 2 angeordnete Anode 8 wird von einem äußeren Strömungskanal 20 umgeben, in dem ein Brenngas 22 strömt (durchgehender Pfeil in Fig. 1a) und mit der Anode 8 in Kontakt tritt. Die äußere Begrenzung des äußeren Strömungskanals 20 ist in Fig. 1 nicht, jedoch in Fign. 3a, 3b, 6a und 8 mit der Bezugsziffer 40 dargestellt.

Wie aus Fign. 1a, 1b zu ersehen ist, ist die Kathode 12 bzw. die Kathodenschicht 14 wesentlich dicker als die Anode bzw. die Anodenschicht 8. Die erhöhte Dicke der Kathode 12 wird vor allem durch die zweite Kathodenschicht 15 in Form einer elektrisch leitenden Perovskit-Keramik erreicht. Für die Kathode 12 bzw. die erste Kathodenschicht 14 eignen sich Lanthanchromit, Yttriumchromit und LSM. Zur Erhöhung der elektrischen Leitfähigkeit können die Keramiken mit Metallen oder Metallfasern versetzt sein.

Die Rohrwandung 2 ist im Bereich der ersten Stirnseite 4 plan geschliffen, so dass die freiliegende Kathode 12 mit den beiden Kathodenschichten 14 und 15 eine kreisringförmige, plane erste elektrische Kontaktfläche 24 zur elektrischen Kontaktierung der Kathode bildet. Damit kein Kurzschluss zwischen Kathode 12 und Anode 8 auftreten kann, ist die Anode bzw. die Anodenschicht 8 im Bereich der ersten Stirnseite 4 zurück versetzt. Im Bereich der zweiten Stirnseite 6 überragt die Anodenschicht 8 die Elektrolytschicht 10 und die Kathodenschicht 12 etwas. Die Elektrolytschicht 10 und insbesondere die Kathodenschicht 12 sind mit einer kreisringförmigen Isolationsschicht 26 abgedeckt, sodass sich zusammen mit der überstehenden Anodenschicht 8 eine Stirnfläche ergibt, die von einer planen, kreisringförmigen Leiterschicht 28 überdeckt wird und eine zweite Stirnseite 6 definiert, die eine zweite elektrische Kontaktfläche 30 für die Anode 8 bildet. Die Leiterschicht 28 wird auch als Interkonnektor 28 bezeichnet. Durch die kreisringförmige Ausgestaltung der Isolationsschicht 26 sowie der Leiterschicht (des Interkonnektors) 28 wird ermöglicht, dass bei Aufeinanderstapeln einer Mehrzahl von Brennstoffzellen 1 ein durchgehender innerer Strömungskanal 16 bereitgestellt wird.

Dabei ist zu beachten, daß der Interkonnektor 28 ebenso wie die Anode 8 als auch als Materialschichten ausgebildet sind, die durch geeignete Maßnahmen wie z.B. Tauchen, Pinseln, Sprühen oder elektrochemische Verfahren aufgebracht werden können. Es ist möglich, die Eigenschaften der als Interkonnektor 28 und als Anode 8 aufgebrachten Materialien ineinander übergehen zu lassen, sodass sich ein Übergangsbereich ergibt, der sich mehr in den Bereich des Interkonnektors 28 oder mehr in den Bereich der Anode 8 erstrecken kann. Dieser Fall ist in den Zeichnungen nicht näher dargestellt.

Bei dem vorliegenden Beispiel ist es von Vorteil, dass der Luftstrom 18 im Inneren der Brennstoffzelle 1 verläuft. Dadurch kann vermieden werden, dass die Luft 18 mit einer üblicherweise aus Stahl gefertigten Umhüllung der Brennstoffzelle 1 in Berührung kommt. Dies wäre problematisch, da bei hohen Temperaturen Chrom aus dem Stahl ausdampfen kann, wenn dieser mit Luft in Berührung kommt.

Bei dem vorstehend beschriebenen Beispiel der Erfindung liegt die Kathode 12 dem inneren Strömungskanal 16 zugewandt, da die Kathode 12 dem Luftstrom 18 ausgesetzt sein muss. Aus fertigungstechnischen Gründen kann es aber auch vorteilhaft sein, die Kathode 12 außen und die Anode 8 innen zu haben, weil es dann möglich ist, den Elektrolyten 10 auf die Anode 8 aufzuspritzen und die Elektrolytschicht 10 insgesamt dünner auszuführen. Da in diesem Fall der Luftstrom 18 außen verläuft, ist es vorteilhaft, wenn die Stahlumhüllung innen zusätzlich beschichtet ist, um ein Ausdampfen von Chrom zu verhindern. Die Beschichtung der Stahlumhüllung kann aus einem keramischen Material, z.B. Aluminiumoxid, bestehen.

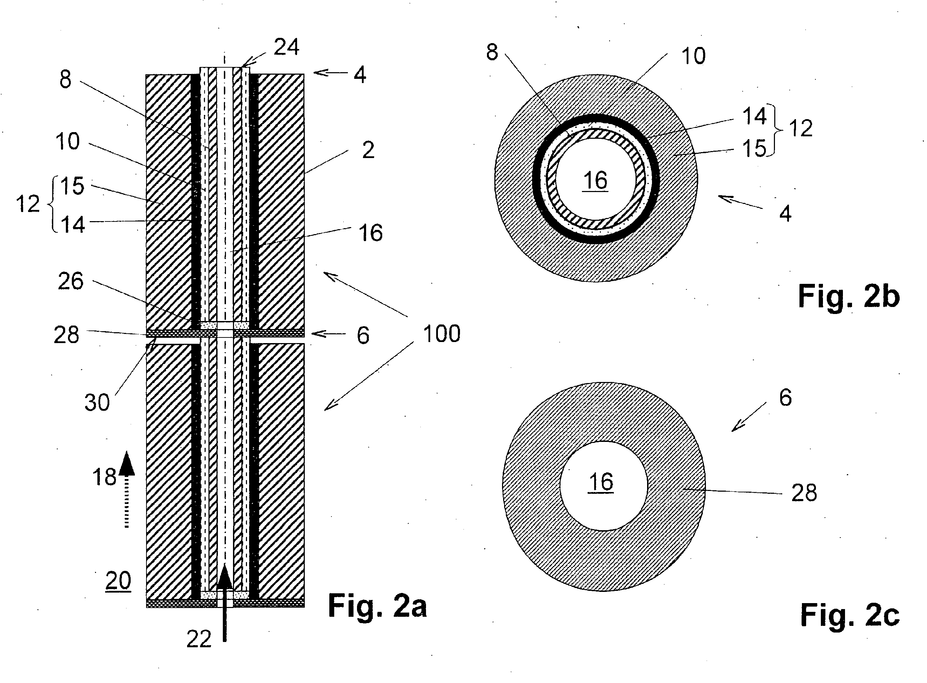

Die Fign. 2a, 2b und 2c zeigen demgemäß ein zweites alternatives Beispiel einer Brennstoffzelle 100. In Fig. 2a sind zwei identische Brennstoffzellen 100 dargestellt, die übereinander angeordnet sind. Diese Brennstoffzelle 100 gemäß der zweiten Ausgestaltung weist die gleichen Komponenten wie die Brennstoffzelle 1 des ersten Beispiels auf, und es werden daher die gleichen Bezugszeichen verwendet. Der Unterschied zwischen den beiden Brennstoffzellenformen besteht lediglich darin, dass die Abfolge von Anode 8, Elektrode 10 und Kathode 12 vertauscht ist. Damit ist bei der Brennstoffzelle 100 der zweiten Ausführungsform die äußere Schicht der Rohrwandung 2 die Kathodenschicht 12 mit der zweiten Kathodenschicht 15 als äußerster Schicht. Die Anodenschicht 8 ist damit die innerste Schicht der Rohrwandung 2. Damit strömt im inneren Strömungskanal 16 das Brenngas 22, während im äußeren Strömungskanal 20 das Oxidationsmittel 18 strömt. Der übrige Aufbau der beiden Ausführungsformen ist identisch. Es ist zu beachten, dass die Größenverhältnisse, insbesondere die Durchmesserverhältnisse der einzelnen Schichten der Brennstoffzelle 100 und des inneren Stömungskanals 16 in Fig. 2a einerseits und in Fign. 2b und 2c andererseits unterschiedlich dargestellt sind.

Da die Brennstoffzellen gemäß der Erfindung mit planen Flächen 4, 6 aufeinander liegen, kann es sein, dass sich im Betrieb seitliche Verschiebungen zwischen aufeinander bzw. hintereinander angeordneten Brennstoffzellen einstellen. Es kann also wünschenswert sein, eine Einrichtung bereitzustellen, die eine Zentrierung der Brennstoffzellen relativ zueinander ermöglicht, ohne den Betrieb der Brennstoffzellenanordnung zu beeinträchtigen.

Die Fign. 3a und 3b stellen eine beispielhafte Anordnung von Brennstoffzellen innerhalb einer gemeinsamen Umhüllung dar, wobei in Fig. 3b, die eine entlang einer Linie IIIB-IIIB in Fig. 3a genommene Querschnittsansicht ist, eine erste beispielhafte Zentriereinrichtung sichtbar ist. In Fig. 3a ist eine Abwandlung der Brennstoffzelle 1 aus Fig. 1 derart dargestellt, dass die Isolationsschicht 26 in einem Arbeitsgang mit der Elektrolytschicht 10 aufgebracht ist und insbesondere auch aus dem gleichen Material besteht. Mit anderen Worten, die Isolationsschicht 26 und die Elektrolytschicht 10 bilden hier eine einzige durchgehende Schicht, die auch als "Elektrolyttopf" bezeichnet wird und zur Unterscheidung mit der Bezugsziffer 52 bezeichnet wird.

Gemäß der Darstellung in Fign. 3a und 3b sind die Brennstoffzellen 1 innerhalb einer Umhüllung 40 (auch als Brennstoffzellenhülle 40 bezeichnet) so angeordnet, dass jeweils eine erste Stirnfläche 4 einer Brennstoffzelle 1 über einen Interkonnektor 28 an einer zweiten Stirnfläche 6 einer benachbarten Brennstoffzelle 1 zu liegen kommt. Dabei weist die Rohrwandung 2 einen Abstand zu der Brennstoffzellenhülle 40 auf. Wie in Fig. 3b gezeigt, wird der Abstand mittels einer Mehrzahl von Stäben 44 aufrechterhalten, die innerhalb der Brennstoffzellenhülle 40 in Längsrichtung angeordnet sind und sowohl an der Innenfläche der Brennstoffzellenhülle 40 als auch an der Außenfläche der Rohrwandung 2 anliegen. Im gezeigten Beispiel sind drei Stäbe 44 unter im wesentlichen gleichen Abständen in Umfangsrichtung angeordnet. Es versteht sich, dass auch mehr Stäbe 44 vorhanden sein können. Die Stäbe 44 bestehen vorzugsweise aus einem keramischen Material und ist insbesondere elektrisch nichtleitend und chemisch inaktiv.

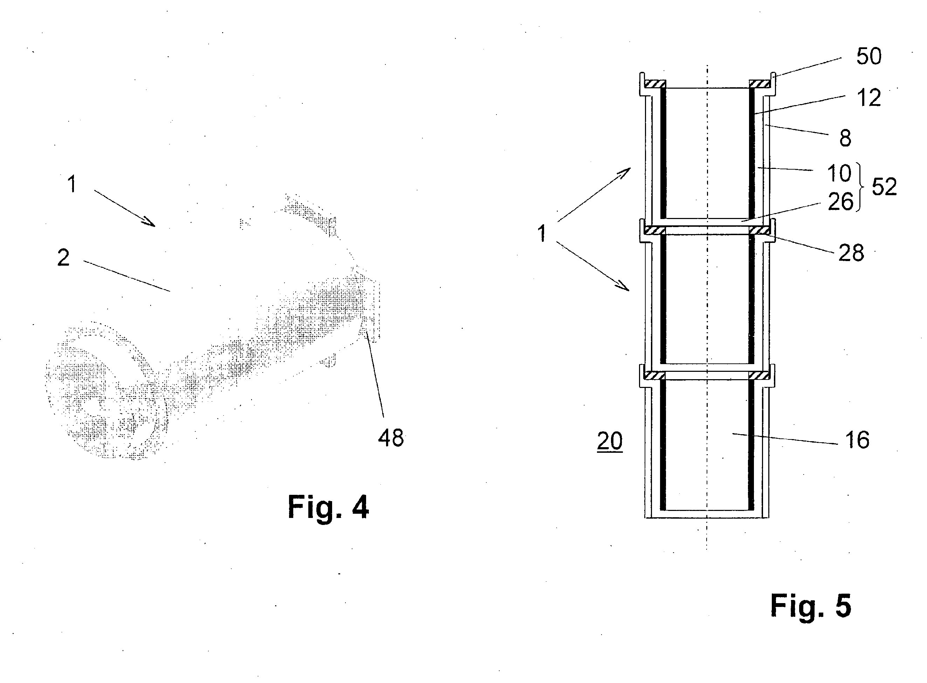

In Fig. 4 ist ein zweites Beispiel einer Zentriereinrichtung für Brennstoffzellen dargestellt. In der Zeichnung ist der äußere Umriss der Rohrwandung 2 einer Brennstoffzelle 1 dargestellt. Die Brennstoffzelle 1 weist vier im Bereich eines Endes (vorzugsweise des oberen Endes 4) der Brennstoffzelle 1 radial abstehende Abstandshalter 48 auf. Die Abstandshalter 48 dienen dazu, den Abstand zu weiteren Brennstoffzellen, die neben der Brennstoffzelle 1 angeordnet sind, aufrechtzuerhalten. Falls die Brennstoffzellen zur Anordnung innerhalb einer Brennstoffzellenhülle vorgesehen sind, können die Abstandshalter 48 auch so angepasst sein, dass sie den Abstand zu der Brennstoffzellenhülle aufrechterhalten. Die Abstandshalter 48 sind vorzugsweise einstückig mit dem Elektrolyten 10 bzw. dem Elektrolyttopf 52 der Rohrwandung 2 ausgebildet.

Fig. 5 zeigt ein drittes Beispiel einer Zentriereinrichtung für Brennstoffzellen. In der Zeichnung sind drei Brennstoffzellen 1 gezeigt, die übereinander angeordnet sind. Grundsätzlich handelt es sich hierbei um die Abwandlung der Brennstoffzelle 1 aus Fig. 3a, bei welcher die Elektrolytschicht 10 und die Isolationsschicht 26 aus dem gleichen Material ausgebildet sind und einen Elektrolyttopf 52 bilden; dies spielt aber für das Verständnis der Zentriereinrichtung keine tragende Rolle. Im Bereich des oberen Endes 4 jeder Brennstoffzelle 1 ist eine kragenförmige Verlängerung 50 vorgesehen, die radialer und axialer Richtung über die Außenkontur der Rohrwandung 2 derart hinausragt, dass das untere Ende 6 einer benachbarten Brennstoffzelle 1 (der nächstoberen Brennstoffzelle 1 in Fig. 5) davon aufgenommen wird und radialen Halt findet. Die kragenförmige Verlängerung 50 kann mit der Rohrwandung 2 einstückig ausgebildet oder als aufgesetztes "Hütchen" separat ausgebildet sein. Im gezeigten Beispiel ist die kragenförmige Verlängerung 50 einstückig mit dem Elektrolyten 10 bzw. dem Elektrolyttopf 52 der Rohrwandung 2 ausgebildet.

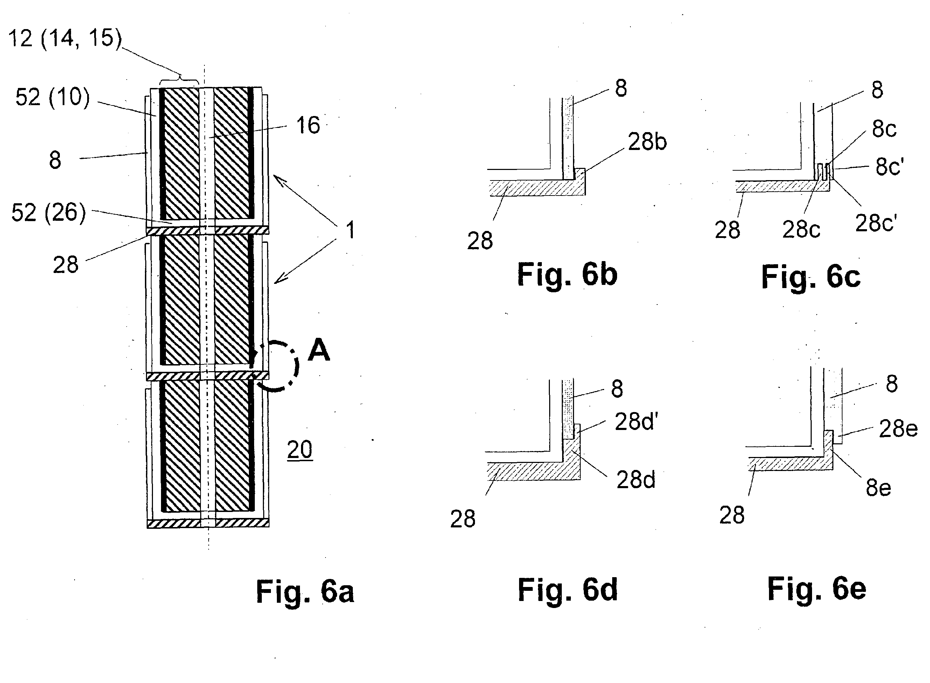

In Fign. 6a ist eine Anordnung von drei Brennstoffzellen 1 schematisch dargestellt, und in Fign. 6b bis 6e ist jeweils die Einzelheit "A" in Fig. 6a vergrößert dargestellt. In Fign. 6b bis 6e sind dabei verschiedene alternative Bauarten des Interkonnektors 28 und der Anode 8 gezeigt.

In der Grundform ist der Interkonnektor 28 auf der durch die Anode bzw. die Anodenschicht 8 gebildeten ringförmigen Stirnfläche (sowie den Stirnflächen der Elektrolytschicht und der Isolationsschicht 26) auf und bildet die zweite elektrische Kontaktfläche 30 ausgebildet. Diese plane zweite elektrische Kontaktfläche 30 liegt wiederum auf der planen ersten elektrischen Kontaktfläche 24 der darunterliegenden Brennstoffzelle 1 auf (vgl. z.B. Fig. 3a). Durch thermische und mechanische Spannungen kann es vorkommen, dass die planen Kontaktflächen 24, 30 nicht vollständig dicht aufeinanderliegen und Luft aus dem inneren Strömungskanal 16 in den äußeren Strömungskanal 20 austreten kann. Sofern die austretende Luftmenge gering ist, kann die in diesem Fall durch das direkte Aufeinandertreffen von Luft und Brenngas auftretende Temperaturspitze durch geeignete Kühlungsmaßnahmen wie etwa durch Anordnen der Brennstoffzellen 1 in einer Wärmerohranordnung so weit abgefangen werden, dass eine Zerstörung der Brennstoffzellen 1 vermieden werden kann. Allerdings ist zu beachten, dass direkt an der Austrittsstelle Luft mit hoher Temperatur vorliegt, was zu einer unerwünschten Oxidation der Anodenschicht 8 auf der Außenseite der Rohrwandung 2 im Bereich der unteren Stirnseite 6 führen kann. Dem kann durch geeignete Ausbildung des Rands des Interkonnektors 28 und der Stirnseite der Anode 8 so, dass die Anode im Bereich der unteren Stirnseite 6 nicht eventuell austretenden Luftströmen ausgesetzt ist, begegnet werden.

In einer in Fig. 6b gezeigten Abwandlung weist die Anode 8 ein flaches Ende auf, wie es auch bisher der Fall war. D.h., die Anodenschicht ist bis zum axial unteren Ende der Elektrolytschicht aufgebracht. Der Interkonnektor 28 erstreckt sich auf der Stirnseite in radialer Richtung über den Außendurchmesser der Anodenschicht 8 hinaus und ein wenig weiter in Richtung der oberen Stirnseite 4 (nach oben in Fig. 6b). Dies kann z.B. dadurch bewerkstelligt werden, dass der Interkonnektor 28 erst nach der Anodenschicht 8 und teilweise auf dieser in dieser Form aufgebracht wird. Dadurch weist der Interkonnektor 28 einen Radius auf, der größer als der Außendurchmesser der Anode 8 ist, und weist ferner einen in axialer Richtung auf die Anode 8 weisenden ringförmigen Verlängerungsabschnitt 28b auf, der so angepasst ist, dass der Rand der Anode 8 von dem ringförmigen Verlängerungsabschnitt 28b umschlossen wird. So ist die Anode dem Gasstrom in dem äußeren Strömungskanal 20 erst an einer Stelle ausgesetzt, die ein kleines Stück von der unteren Stirnseite 6 entfernt ist. Der Abstand ist dabei so bemessen, dass aus dem inneren Strömungskanal 16 austretende Luft bereits verbrannt ist, bevor der Gasstrom auf die Anodenschicht 8 trifft. Dadurch kann verhindert werden, dass aus dem inneren Strömungskanal 16 nach außen austretende Luft auf die Anodenschicht 8 trifft. Mit der Ausbildung gemäß dieser Abwandlung kann auch die elektrische Verbindung zwischen der Anodenschicht 8 und der Interkonnektorschicht 28 verbessert werden.

Eine andere, in Fig. 6c gezeigte Abwandlung unterscheidet sich von demjenigen in Fig. 6b dadurch, dass nach Aufbringen einer ersten Schicht der Anode 8 und einer ersten Schicht des Interkonnektors 28 in oben beschriebener Weise derart, dass der untere Randbereich der Anode 8 durch einen ringförmigen Verlängerungsabschnitt 28c der Interkonnektorschicht 28 überdeckt wird, jeweils eine weitere Schicht der Anode 8, welche den ringförmigen Verlängerungsabschnitt 28c mit einem Überlappungsabschnitt 8c überdeckt, eine weitere Schicht des Interkonnektors 28, welche einen zweiten, die Anode in gleicher Weise wie oben im Bereich des unteren Endes umgreifenden ringförmigen Verlängerungsabschnitt 28c' aufweist, und zuletzt eine dritte Schicht der Anode 8, die wiederum den zweiten ringförmigen Verlängerungsabschnitt 28b der Interkonnektorschicht 28 in einem Überlappungsabschnitt 8c' überdeckt, aufgebracht wurden. Damit weisen die Anode 8 und der Interkonnektor 28 einen verzahnten Bereich auf, der eine Verbindung zwischen der Anodenschicht 8 und dem Interkonnektor 28 verbessert. Auch wenn im untersten Bereich die außen überlappende Anodenschicht anoxidieren sollte, werden so die elektrischen Eigenschaften nicht beeinträchtigt. Wenn der letzte Schritt mit Ausbildung des zweiten Überlappungsabschnitts 8c' der Anode 8 weggelassen wird, kann die Anodenschicht wie in der in Fig. 6b gezeigten Abwandlung so weit von einer möglichen Austrittsstelle von Luft gebracht werden, dass diese gar nicht auf die Anodenschicht 8 treffen kann.

Eine weitere, in Fig. 6d gezeigte Abwandlung unterscheidet sich von demjenigen in Fig. 6b dadurch, dass die Anode 8 von dem zweiten Ende 6 in axialer Richtung zurückgesetzt ist und die Interkonnektorschicht 28 in einem ersten ringförmigen Verlängerungsabschnitt 28d um diesen Betrag nach oben um die Elektrolytschicht 10 herumreicht und diese ringförmig umgreift und erst dann in einem zweiten ringförmigen Verlängerungsabschnitt 28d', der sich an den ersten ringförmigen Verlängerungsabschnitt 28d anschließt, den unteren Rand der Anodenschicht 28 ringförmig überdeckt. Damit wird das untere Ende der Anodenschicht 8 noch weiter von der möglichen Austrittsstelle von Luft entfernt. Es versteht sich, dass diese Abwandlung mit der in Fig. 6c gezeigten Abwandlung kombiniert werden kann, also mehrere einander überlappende Schichten der Anode 8 und des Interkonnektors 28 aufgetragen werden können.

Schließlich wird in Fig. 6e eine Abwandlung gezeigt, bei welcher der Interkonnektor 28 im Bereich des unteren Endes 6 die Elektrolytschicht 10 in Form eines ringförmigen Verlängerungsabschnitt 28e umgreift und die Anode 8 in diesem Bereich den ringförmigen Verlängerungsabschnitt 28e des Interkonnektors 28 mit einem Überlappungsabschnitt 8e überdeckt. Bei diesem Beispiel wird zuerst die Interkonnektorschicht 28 aufgebracht und dann erst die Anodenschicht 8. Es ist hierbei darauf zu achten , den Übertappungsabschnitt 8e nicht ganz bis zum unteren Ende 6 der Brennstoffzelle 1 zu führen, sodass wie bei den vorstehenden Abwandlungen eventuell austretende Luft bereits verbrannt ist, bevor sie auf die Anodenschicht 8 treffen und diese oxidieren kann. Auch hier können mehrere einander überlappende Schichten der Anode 8 und des Interkonnektors 28 vorgesehen sein.

Die in den vorstehenden Beispielen gemäß Fign. 3, 4, 5 und 6 gezeigten Beispiele und vorstehend beschriebenen Abwandlungen beziehen sich auf eine Anordnung mit der Brennstoffzelle 1, bei welcher die Anode 8, die Elektrolytschicht 10 und die Kathode 12 von außen nach innen angeordnet sind. Die gleichen Abwandlungen sind jedoch auch auf die Brennstoffzelle 100 anwendbar, bei welcher die Reihenfolge der Schichten in radialer Richtung umgekehrt ist. Die erforderlichen Anpassungen sind aus der vorstehenden Beschreibung ohne weiteres ersichtlich.

In den bisher gezeigten Ausführungsformen ist der innere Strömungskanal 16 durch ein einziges durchgehendes Loch verwirklicht, welches die Interkonnektorschicht 28, die Isolationsschicht 26 und die Kathodenschicht 12 bzw. die zweite Kathodenschicht 15 mittig in axialer Richtung durchdringt. Der Strömungskanal 16 ist jedoch nicht auf diese Ausführung beschränkt. Gemäß einer nicht näher dargestellten Abwandlung ist es auch möglich, dass mehrere ggf. kleinere Durchgangslöcher die Brennstoffzelle 1 in axialer Richtung durchdringen, die auf dem Querschnitt der Brennstoffzelle 1 verteilt sind, wobei es nicht erforderlich ist, dass eines der Durchgangslöcher genau in der axialen Mitte der Brennstoffzelle 1 angeordnet ist. Es ist nur zu beachten, dass die Durchgangslöcher ausschließlich in einem Querschnittsbereich vorzusehen sind, welcher der Kathodenschicht 12 bzw. der zweiten Kathodenschicht 15 entspricht. Hierdurch wird die Kontaktoberfläche zwischen Brenngas und Kathode vergrößert.

Besonders groß wird die Kontaktoberfläche zwischen Brenngas und Kathode 12 bzw. zweiter Kathodenschicht 15, wenn, anstatt Löcher in der Kathode vorzusehen, die Porosität des Materials der Kathode 12 oder zumindest der zweiten Kathodenschicht 15 so gewählt wird, dass sich Gaskanäle innerhalb derselben bilden. Lediglich innerhalb der Interkonnektorschicht 28 und der Isolationsschicht 26 sind dann noch Durchgangslöcher erforderlich, um den Gasstrom von einer Brennstoffzelle 1 zur nächsten zu gewährleisten. Ggf. kann die zweite Kathodenschicht 15 an der ersten Stirnseite 4 der Brennstoffzelle 1 auch etwas zurückgenommen sein, um die Druckverteilung an der ersten Stirnseite 4 zu vergleichmäßigen. Derzeit wird jedoch bevorzugt, die Kathodenschicht im Bereich der ersten Stirnseite 4 so weit wie möglich zu belassen, um möglichst guten elektrischen Kontakt mit der nächsten Zelle (d.h., mit dem Interkonnektor 28 der nächsten Zelle 1) zu gewährleisten.

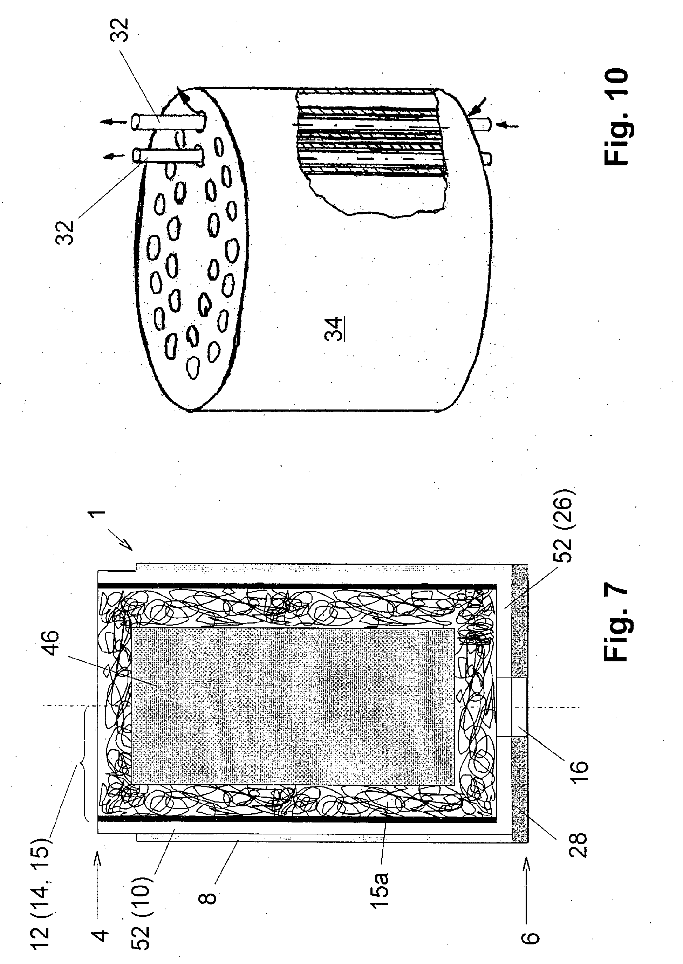

In Fig. 7 ist eine Abwandlung der in Fig. 1 bzw. 3 u.a. gezeigten Brennstoffzelle 1 schematisch gezeigt, die in ihrem Grundaufbau dem in Fig. 1 gezeigten entspricht und die vorstehenden Überlegungen verwirklicht. D.h., die Rohrwandung 2 der Brennstoffzelle 1 umfasst von außen nach innen die Anode oder Anodenschicht 8, gefolgt von der Elektrolytschicht 10 als Teil eines auch die Isolationsschicht 26 umfassenden Elektrolyttopfes 52 und der Kathodenschicht oder Kathode 12, welche die innerste Schicht der Rohrwandung 2 darstellt. Die Kathode 12 umfasst eine erste Kathodenschicht 14 und eine an die erste Kathodenschicht 14 angrenzende zweite Kathodenschicht 15. Die zweite Kathodenschicht 15 geht bis zur axialen Mitte der Brennstoffzelle 1 durch (wodurch die rohrförmige Brennstoffzelle 1 auch als stabförmige Brennstoffzelle betrachtet werden kann) und ist von Gaskanälen 15a durchzogen, die sich durch geeignete Wahl der Porosität des Materials der Kathodenschicht 15 bilden und Teil des inneren Strömungskanals sind.

Zusätzlich enthält der zentrale Teil des inneren Strömungskanals 16 einen Kern 46, auf welchem die Schichten der Kathoden-, Elektrolyt- und Anodenschichten leicht aufgebracht werden können. Die Dimensionierung des Kerns 46 in radialer Richtung ist in Abhängigkeit z.B. von der Porosität des Kathodenmaterials so bemessen, dass ein optimales Verhältnis der Strömungsmengen im äußeren Strömungskanal 20 und im inneren Strömungskanal 16, 15a erzielt wird. Der Kern 46 ist aus einem Material hergestellt, das weniger porös als das der zweiten Kathodenschicht 15 ist, und bewirkt, dass der Strömungswiderstand in diesem Teil größer ist als in den Gaskanälen 15a in der zweiten Kathodenschicht 15. Dadurch wird der Gasstrom durch die Strömungskanäle 15a in der zweiten Kathodenschicht 15 gezwungen.

Der Kern 46 ist im Bereich des oberen Endes 4 ein Stück zurückgenommen, da sonst die Strömung des Brenngases zur nächsten Brennstoffzelle 1 (d.h., in den inneren Strömungskanal 16 in dem Interkonnektor 28 und der Isolationsschicht 26 der nächsten Brennstoffzelle 1) blockiert wäre. Im gezeigten Beispiel ist der dadurch frei werdende Raum durch das Material der zweiten Kathodenschicht 15 ausgefüllt, er kann aber auch ganz oder teilweise frei bleiben; dadurch kann je nach Herstellungsweise u.U. ein zusätzlicher Arbeitsschritt eingespart werden.

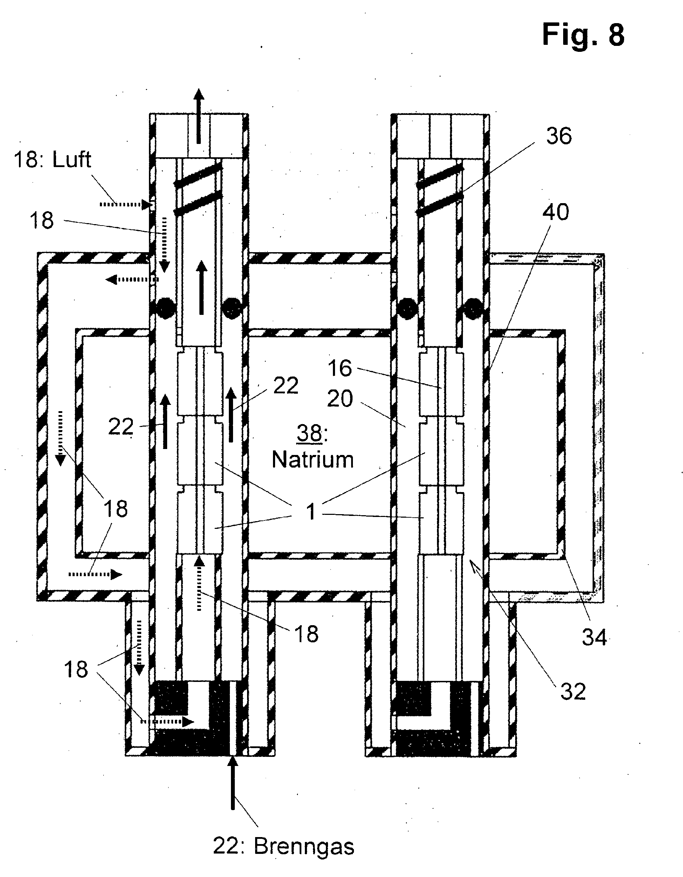

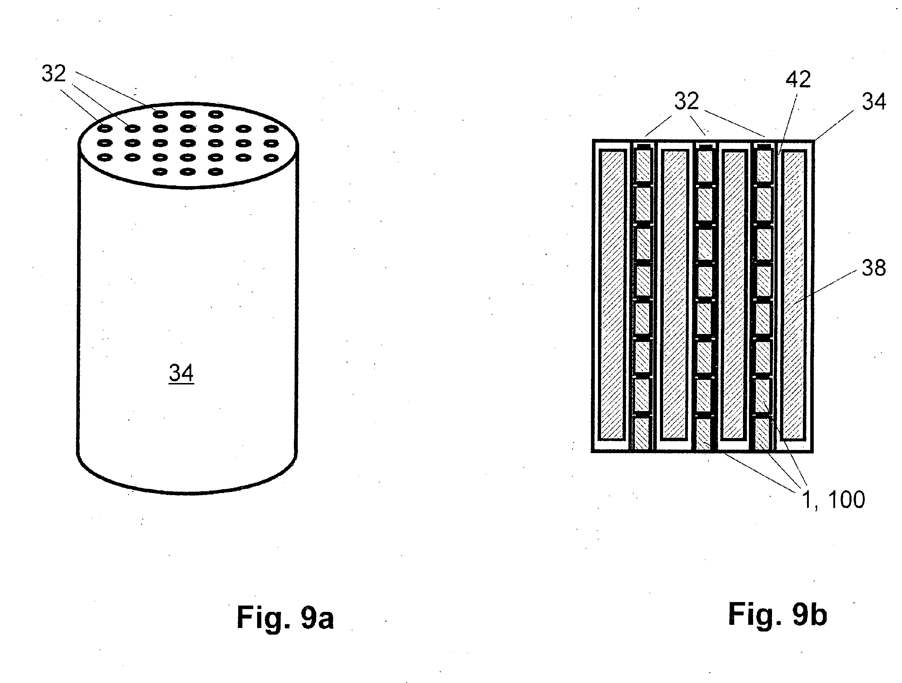

Die Fign. 8, 9 und 10 zeigen schematisch eine erfindungsgemäße Brennstoffzellenanordnung bzw. Brennstoffzellenstapelanordnung, die eine Mehrzahl von nebeneinander angeordneten Brennstoffzellensäulen 32 umfasst. Die einzelnen Brennstoffzellensäulen 32 wiederum bestehen aus einer Mehrzahl von aufeinander gestapelten Brennstoffzellen 1 bzw. 100. Diese Brennstoffzellensäulen 32 sind in einem gemeinsamen Wärmetauscherbehälter 34 angeordnet. Wie insbesondere aus der Fig. 8 zu ersehen ist, umfassen die einzelnen Brennstoffzellensäulen 32 an ihrem oberen und unteren Ende eine Einrichtung 36 zum Beaufschlagen mit mechanischem Druck, so dass die einzelnen Brennstoffzellen 1 bzw. 100 in der jeweiligen Brennstoffzellensäule 32 aufeinander gedrückt werden.

Das Innere des gemeinsamen Wärmetauscherbehälters 34, in dem die Brennstoffzellensäule 32 eingetaucht sind, bilden einen gemeinsamen Dampfraum für ein während des Wärmetransports die Phase wechselndes Wärmetransportmedium 38, z.B. in Form von Natrium. Wie insbesondere aus Fig. 8 zu ersehen ist, ist der äußere Strömungskanal 20 für Brenngas 22 oder Oxidationsmittel 18 durch eine Brennstoffzellenhülle 40 begrenzt. Im gezeigten Beispiel wird Brenngas 22 der Brennstoffzellenhülle 40 von unten zugeführt und strömt im äußeren Strömungskanal 20 nach oben, während die Luft 18 der Anordnung zunächst im oberen Bereich zugeführt wird, dann in einem den Wärmetauscherbehälter 34 umgebenden Kanal diesen umströmend nach unten geleitet und im unteren Bereich der Brennstoffzellenhülle 40 dem inneren Strömungskanal 16 der Brennstoffzellen 1, 100 zugeführt wird. In diesem inneren Strömungskanal 16 strömt die Luft nach oben. Oberhalb der Brennstoffzellensäule werden die Gasströme des inneren Strömungskanals 16 und des äußeren Strömungskanals 20 zusammengeführt und dann gemeinsam abgeführt.

Die in der Brennstoffzelle 1, 100 erzeugte Abwärme wird über die Brennstoffzellenhülle 40 an das Wärmetransportmedium 38 abgegeben. Dabei bildet der gemeinsame Wärmetauscherbehälter 34 mit dem die Phase wechselnden Natrium als Wärmetransportmedium 38 eine Art Heat-Pipe (Wärmerohr). Das flüssige Natrium 38 verdampft an der Brennstoffzellenhülle 40, strömt zur Außenseite des gemeinsamen Wärmetauscherbehälters 34 und kondensiert dort und gibt dabei Wärme ab. Gleichzeitig kann das dampfförmige Wärmetransportmedium 38 auch in kühleren Bereichen der Brennstoffzellenhülle 40 (einem unteren Bereich in Fig. 8) kondensieren, während es in den Bereichen, in denen sich das Gas in dem äußeren Strömungskanal 20 aufgrund der elektrochemischen Reaktion in der Brennstoffzelle 1, 100 bereits aufgeheizt hat, (einem oberen Bereich in Fig. 8) das flüssige Natrium verdampft, wodurch die gesamte Brennstoffzellenhülle 40 isotherm gehalten wird. Zusätzlich kann das dampfförmige Wärmetransportmedium 38 die Wärme auch an das den Wärmetauscherbehälter 34 umströmende Gas abgeben, sodass dieses bei Eintritt in den inneren Strömungskanal 16 im unteren Bereich der Brennstoffzellensäule 32 bereits vorgewärmt ist. Das gasförmige Natrium 38 kann aber auch zusätzlich oder allein an ganz anderer Stelle kondensieren, um seine thermische Energie nutzbar zu machen.

Es versteht sich, dass in dem gemeinsamen Wärmetauscherbehälter 34 nicht nur Brennstoffzellen gemäß den zuvor dargestellten, speziell an die hier bestehenden Anforderungen angepassten Beispielen, sondern auch bereits im Stand der Technik bekannte tubuläre Brennstoffzellen angeordnet werden können.

### Bezugszeichenliste.

- 1, 100: Brennstoffzelle
- 2: Rohrwandung
- 4: erste, obere Stirnseite
- 6: zweite, untere Stirnseite
- 8: Anode(-nschicht)
- 8c: ringförmiger Überlappungsabschnitt
- 8e: ringförmiger Überlappungsabschnitt
- 10: Elektrolyt(-schicht)
- 12: Kathode(-nschicht)
- 14: erste Kathodenschicht
- 15: zweite Kathodenschicht
- 15a: Gaskanäle in der zweiten Kathodenschicht
- 16: innerer Strömungskanal
- 18: Oxidationsmittel
- 20: äußerer Strömungskanal
- 22: Brenngas
- 24: erste elektrische Kontaktfläche
- 26: kreisringförmige Isolationsschicht
- 28: kreisringförmige Leiterschicht bzw. Interkonnektor
- 28b: ringförmiger Verlängerungsabschnitt
- 28c, 28c': ringförmiger Verlängerungsabschnitt
- 28d: erster ringförmiger Verlängerungsabschnitt
- 28d': zweiter ringförmiger Verlängerungsabschnitt
- 28e: ringförmiger Verlängerungsabschnitt
- 30: zweite elektrische Kontaktfläche
- 32: Brennstoffzellensäule
- 34: gemeinsamer Wärmetauscherbehälter
- 36: Einrichtung zum Beaufschlagen mit Druck
- 38: Wärmetransportmedium
- 40: Brennstoffzellenhülle
- 42: Kapillarstruktur
- 44: Keramikstab
- 46: Kern (Material hohen Strömungswiderstands)
- 48: Abstandshalter
- 50: kragenförmige Verlängerung
- 52: Elektrolyttopf

## Patentansprüche

1. Brennstoffzellenanordnung mit
wenigstens einer gas- und flüssigkeitsdichten Brennstoffzellenhülle (40), innerhalb welcher eine Kathode, ein Elektrolyt und eine Anode der Brennstoffzelle (1; 100) sowie Strömungskanäle (16, 15a, 20) für Oxidationsmittel (18) und/oder Brenngas (22) angeordnet sind, und
einer Einrichtung zur Regulierung der Betriebstemperatur der Brennstoffzelle, welche einen Wärmetauscherbehälter (34) umfasst, der die Brennstoffzellenhülle wenigstens teilweise umschließt,
wobei in dem Wärmetauscherbehälter ein Wärmetransportmedium (38) zirkuliert, das von der als Wärmetauscherfläche dienenden Brennstoffzellenhülle Abwärme der Brennstoffzelle aufnimmt.

2. Brennstoffzellenanordnung nach Anspruch 1, **dadurch gekennzeichnet, dass** das Wärmetransportmedium die von der Brennstoffzellenhülle aufgenommene Abwärme in einer Wärmesenke und teilweise an kühlere Bereiche der Brennstoffzellenhülle abgibt.

3. Brennstoffzellenanordnung nach Anspruch 1 oder 2, **dadurch gekennzeichnet, dass** das Wärmetransportmedium während des Wärmetransports einen Phasenwechsel durchläuft, wobei das Wärmetransportmedium durch Verdampfung Abwärme von der Brennstoffzellenhülle aufnimmt und durch Kondensation in kühleren Bereichen (Wärmesenke) des Wärmetauscherbehälters durch Kondensation wieder abgibt, und wobei der Wärmetauscherbehälter Teil einer Wärmerohranordnung ist.

4. Brennstoffzellenanordnung nach einem der Ansprüche 1 bis 3, **dadurch gekennzeichnet, dass** die Brennstoffzellenhülle an ihrer Außenseite wenigstens teilweise mit einer Kapillarstruktur (42) versehen ist.

5. Brennstoffzellenanordnung nach einem der Ansprüche 1 bis 4, **dadurch gekennzeichnet, dass** die Brennstoffzellenhülle rohrförmig ist und eine erste und eine zweite Stirnseite aufweist, wobei wenigstens eine der ersten und der zweiten Stirnseite der Brennstoffzellenhülle aus dem Wärmetauscherbehälter herausragt.

6. Brennstoffzellenanordnung nach einem der Ansprüche 1 bis 5, **dadurch gekennzeichnet, dass** eine Mehrzahl von Brennstoffzellen mit Brennstoffzellenhülle in einem gemeinsamen Wärmetauscherbehälter angeordnet sind oder eine Mehrzahl von Brennstoffzellenhüllen mit jeweils wenigstens einer Brennstoffzelle in dem gemeinsamen Wärmetauscherbehälter angeordnet sind.

7. Brennstoffzellenanordnung nach einem der Ansprüche 6, **dadurch gekennzeichnet, dass** eine Mehrzahl von Brennstoffzellen in einer Brennstoffzellenhülle jeweils hintereinander in Reihe so in dem gemeinsamen Wärmetauscherbehälter angeordnet sind, dass sie eine Brennstoffzellensäule (32) bilden, wobei eine Einrichtung (36) vorgesehen ist zum Beaufschlagen von mechanischem Druck auf die hintereinander angeordneten Brennstoffzellen der Brennstoffzellensäule.

8. Brennstoffzellenanordnung nach Anspruch 7, **dadurch gekennzeichnet, dass** die Brennstoffzelle (1; 100) rohrförmig oder stabförmig ist und aufweist:
eine erste und eine zweite Stirnseite (4, 6);
eine zwischen den beiden Stirnseiten (4, 6) sich erstreckende Rohrwandung (2);
eine Kathode (12) und eine Anode (8), die sich in der Rohrwandung (2) jeweils mantelförmig erstrecken, mit einem Festelektrolyten (10) dazwischen;
einen inneren Strömungskanal (16) für Oxidationsmittel (18) oder Brenngas (22); und
einen äußeren, die Rohrwandung (2) umgebenden Strömungskanal (20) für Brenngas (22) oder Oxidationsmittel (18); wobei
auf der ersten Stirnseite (4) eine plane, sich in radialer Richtung erstreckende erste elektrische Kontaktfläche (24) zur elektrischen Kontaktierung einer der Kathode (12) und der Anode (8) angeordnet ist;
auf der zweiten Stirnseite (6) eine plane, sich in radialer Richtung erstreckende zweite elektrische Kontaktfläche (30) zur elektrischen Kontaktierung der anderen der Kathode (12) und der Anode (8) angeordnet ist;
die elektrischen Kontaktflächen (24, 30) jeweils wenigstens eine Öffnung für den inneren Strömungskanal (16) aufweisen, und die elektrischen Kontaktflächen (24, 30) benachbarter Brennstoffzellen (1, 100) aufeinander liegen und die Strömungskanäle einen oder mehrere gemeinsame innere Strömungskanäle (16) für Oxidationsmittel/Brenngas (18, 22) und einen gemeinsamen äußeren Strömungskanal (20) für Brenngas/Oxidationsmittel (22, 18) bilden.

9. Brennstoffzellenanordnung nach Anspruch 8, **dadurch gekennzeichnet, dass** die elektrischen Kontaktflächen (24, 30) geglättet sind, um die Abdichtung des inneren gegen den äußeren Strömungskanal (16, 20) zu verbessern.

10. Brennstoffzellenanordnung nach Anspruch 8 oder 9, **dadurch gekennzeichnet, dass** die Schichtdicke der Kathode (12) der Brennstoffzelle (1; 100) in radialer Richtung wesentlich größer ist als die Schichtdicke der Anode (8) derselben, wobei bevorzugt die Schichtdicke der Kathode (12) der Brennstoffzelle (1; 100) mindestens 10%, vorzugsweise 20% bis 60% und insbesondere 30% bis 50% des Radius der rohrförmigen Brennstoffzelle (1; 100) beträgt.

11. Brennstoffzellenanordnung nach einem der Ansprüche 8 bis 10, **dadurch gekennzeichnet, dass** die Kathode (12) eine innere Schicht der Rohrwandung (2) bildet und insbesondere dem inneren Strömungskanal (16) zugewandt ist und die Anode (8) eine äußere Schicht der Rohrwandung (2) bildet und dem äußeren Strömungskanal (20) zugewandt ist, wobei die Stirnfläche der Kathode (12) auf der Seite der ersten Stirnseite (4) der Rohrwandung (2) der Brennstoffzelle (1) die erste elektrische Kontaktfläche (24) als Kontaktfläche für die Kathode (12) bildet und die Stirnfläche der Anode (8) auf der Seite der zweiten Stirnseite (6) der Rohrwandung (2) der Brennstoffzelle (1) die zweite elektrische Konkaktfläche (30) als Kontaktfläche für die Anode (8) bildet.

12. Brennstoffzellenanordnung nach Anspruch 11, **dadurch gekennzeichnet, dass** die zweite elektrische Kontaktfläche (30) der Brennstoffzelle (1) auf der zweiten Stirnseite (6) der Rohrwandung (2) eine ringförmige Schicht (28) aus elektrisch leitendem Material aufweist, und dass zwischen der ringförmigen Schicht (28) und der Stirnfläche der Kathode (12) auf der Seite der zweiten Stirnseite (6) der Rohrwandung (2) eine ringförmige, elektrisch isolierende Schicht (26) insbesondere aus Elektrolytmaterial angeordnet ist.

13. Brennstoffzellenanordnung, nach Anspruch 11 oder 12, **dadurch gekennzeichnet, dass** die Kathode (12) im Bereich der ersten elektrischen Kontaktfläche (24) und im übrigen Bereich eine unterschiedliche Zusammensetzung aufweist.

14. Brennstoffzellenanordnung nach einem der Ansprüche 11 bis 13, **dadurch gekennzeichnet, dass** die zweite Kathodenschicht (15) der Brennstoffzelle (1) von Gaskanälen (15a) durchzogen ist, die wenigstens einen Teil des inneren Strömungskanals bilden, wobei die zweite Kathodenschicht (15) der Brennstoffzelle (1) vorzugsweise wenigstens teilweise bis zur radialen Mitte der Brennstoffzelle (1) reicht oder der zentrale Teil der Brennstoffzelle (1) einen Kern (46) enthält, der aus einem Material derart besteht, dass der Strömungswiderstand in diesem Teil größer ist als in den Gaskanälen (15a) in der zweiten Kathodenschicht (15), und dessen Stirnfläche auf der Seite der ersten Stirnseite (4) der Brennstoffzelle (1) in axialer Richtung zurückgenommen ist.

15. Brennstoffzellenanordnung nach einem der Ansprüche 8 bis 10, **dadurch gekennzeichnet, dass** die Anode (8) der Rohrwandung (2) der Brennstoffzelle (100) dem inneren Strömungskanal (16) und die Kathode (12) der Rohrwandung (2) dem äußeren Strömungskanal (20) zugewandt ist, wobei die Stirnfläche der Anode (8) auf der Seite der ersten Stirnseite (4) der Rohrwandung (2) der Brennstoffzelle (100) die erste elektrische Kontaktfläche (24) als Kontaktfläche für die Anode (8) bildet und die Stirnfläche der Kathode (12) auf der Seite der zweiten Stirnseite (6) der Rohrwandung (2) die zweite elektrische Konkaktfläche (30) als Kontaktfläche für die Kathode (12) bildet.

16. Brennstoffzellenanordnung nach Anspruch 15, **dadurch gekennzeichnet, dass** die zweite elektrische Kontaktfläche (30) der Brennstoffzelle (100) auf der zweiten Stirnseite (6) der Rohrwandung (2) eine ringförmige Schicht (28) aus elektrisch leitendem Material aufweist, und
dass zwischen der ringförmigen Schicht (28) und der Stirnfläche der Anode (8) auf der Seite der zweiten Stirnseite (6) der Rohrwandung (2) eine ringförmige, elektrisch isolierende Schicht (26) aus Festelektrolytmaterial angeordnet ist.

17. Brennstoffzellenanordnung nach Anspruch 15 oder 16, **dadurch gekennzeichnet, dass** die Kathode (12) der Rohrwandung (2) der Brennstoffzelle (100) im Bereich der zweiten elektrischen Kontaktfläche (30) und im übrigen Bereich eine unterschiedliche Zusammensetzung aufweist.

18. Brennstoffzellenanordnung nach einem der Ansprüche 15 bis 17, **dadurch gekennzeichnet, dass** die zweite Kathodenschicht (15) der Brennstoffzelle (100) von Gaskanälen durchzogen ist, die wenigstens einen Teil des äußeren Strömungskanals bilden.

19. Brennstoffzellenanordnung nach einem der Ansprüche 8 bis 18, **dadurch gekennzeichnet, dass** eine Mehrzahl von Brennstoffzellenhüllen mit jeweils einer Brennstoffzellensäule und/oder eine Mehrzahl von Brennstoffzellensäulen jeweils so nebeneinander in dem gemeinsamen Wärmetauscherbehälter angeordnet sind, dass sie eine Brennstoffzellenstapelanordnung bilden.

20. Brennstoffzellenanordnung nach einem der Ansprüche 8 bis 19, **gekennzeichnet durch** eine Einrichtung zum Zentrieren der hintereinander angeordneten Brennstoffzellen (1; 100), die als Abstandshalter zwischen den einzelnen Brennstoffzellensäulen oder als Abstandshalter zu der Brennstoffzellenhülle (40) ausgebildet ist und vorzugsweise an den einzelnen Brennstoffzellen im Bereich ersten und/oder der zweiten Stirnseite (4, 6) angeordnete Elemente (48) umfasst, die aus Festelektrolytmaterial, insbesondere einstückig mit der Elektrolytschicht (10) ausgebildet sind.

## Claims

1. Fuel cell arrangement comprising
at least one gas- and liquid-tight fuel cell casing (40) which has arranged in it a cathode, an electrolyte and an anode of the fuel cell (1; 100) and flow channels (16, 15a, 20) for oxidizing agent (18) and/or fuel gas (22), and
a device for regulating the operating temperature of the fuel cell which comprises a heat exchanger container (34) which at least partially surrounds the fuel cell casing,
with a heat transportation medium (38), which absorbs waste heat of the fuel cell from the fuel cell casing which serves as a heat exchanger surface, circulating in the heat exchanger container.

2. Fuel cell arrangement according to Claim 1, **characterized in that** the heat transportation medium emits the waste heat absorbed from the fuel cell casing to a heat sink and partly to cooler regions of the fuel cell casing.

3. Fuel cell arrangement according to Claim 1 or 2, **characterized in that** the heat transportation medium changes phase during the transportation of heat, the heat transportation medium absorbing waste heat from the fuel cell casing by evaporation and emitting it again in cooler regions (heat sink) of the heat exchanger container by condensation, and the heat exchanger container forming part of a heat pipe arrangement.

4. Fuel cell arrangement according to any one of Claims 1 to 3, **characterized in that** the outer face of the fuel cell casing is at least partially provided with a capillary structure (42).

5. Fuel cell arrangement according to any one of Claims 1 to 4, **characterized in that** the fuel cell casing is pipe-shaped and has a first and a second end face, with at least one of the first and second end faces of the fuel cell casing protruding out of the heat exchanger container.

6. Fuel cell arrangement according to any one of Claims 1 to 5, **characterized in that** a plurality of fuel cells with a fuel cell casing are arranged in a common heat exchanger container, or a plurality of fuel cell casings with in each case at least one fuel cell are arranged in the common heat exchanger container.

7. Fuel cell arrangement according to Claim 6, **characterized in that** a plurality of fuel cells in a fuel cell casing are in each case arranged one behind the other in series in the common heat exchanger container such that they form a fuel cell column (32), with a device (36) being provided for applying mechanical pressure to the fuel cells of the fuel cell column which are arranged one behind the other.

8. Fuel cell arrangement according to Claim 7, **characterized in that** the fuel cell (1; 100) is pipe-shaped or rod-shaped and has:
a first and a second end face (4, 6);
a pipe wall (2) which extends between the two end faces (4, 6);
a cathode (12) and an anode (8) which extend in each case in a jacket-like manner in the pipe wall (2), with a solid electrolyte (10) between them;
an inner flow channel (16) for oxidizing agent (18) or fuel gas (22); and
an outer flow channel (20), which surrounds the pipe wall (2), for fuel gas (22) or oxidizing agent (18); with
a planar first electrical contact area (24), which extends in the radial direction, for making electrical contact with one of the cathodes (12) and the anode (8) being arranged on the first end face (4);
a planar second electrical contact area (30), which extends in the radial direction, for making electrical contact with the other cathode (12) and the anode (8) being arranged on the second end face (6); and
the electrical contact areas (24, 30) having in each case at least one opening for the inner flow channel (16), and the electrical contact areas (24, 30) of adjacent fuel cells (1; 100) resting on one another, and the fuel channels forming one or more common inner flow channels (16) for oxidizing agent/fuel gas (18, 22) and a common outer flow channel (20) for fuel gas/oxidizing agent (22, 18).

9. Fuel cell arrangement according to Claim 8, **characterized in that** the electrical contact areas (24, 30) are smoothed in order to improve sealing of the inner flow channel (16) against the outer flow channel (20).

10. Fuel cell arrangement according to Claim 8 or 9, **characterized in that** the layer thickness of the cathode (12) of the fuel cell (1; 100) in the radial direction is substantially greater than the layer thickness of the anode (8) thereof, with the layer thickness of the cathode (12) of the fuel cell (1; 100) in a preferred manner being at least 10%, preferably 20% to 60%, and in particular 30% to 50%, of the radius of the pipe-shaped fuel cell (1; 100).

11. Fuel cell arrangement according to any one of Claims 8 to 10, **characterized in that** the cathode (12) forms an inner layer of the pipe wall (2), and in particular faces the inner flow channel (16), and the anode (8) forms an outer layer of the pipe wall (2) and faces the outer flow channel (20), the end surface of the cathode (12) on the side of the first end face (4) of the pipe wall (2) of the fuel cell (1) forming the first electrical contact area (24) as a contact area for the cathode (12), and the end surface of the anode (8) on the side of the second end face (6) of the pipe wall (2) of the fuel cell (1) forming the second electrical contact area (30) as a contact area for the anode (8).

12. Fuel cell arrangement according to Claim 11, **characterized in that** the second electrical contact area (30) of the fuel cell (1) has an annular layer (28) comprising an electrically conductive material on the second end face (6) of the pipe wall (2), and
**in that** an annular, electrically insulating layer (26) is arranged between the annular layer (28) and the end surface of the cathode (12) on the side of the second end face (6) of the pipe wall (2).

13. Fuel cell arrangement according to Claim 11 or 12, **characterized in that** the cathode (12) has a different composition in the region of the first electrical contact area (24) than in the rest of the region.

14. Fuel cell arrangement according to any one of Claims 11 to 13, **characterized in that** gas channels (15a) which form at least part of the inner flow channel pass through the second cathode layer (15) of the fuel cell (1), with the second cathode layer (15) of the fuel cell (1) extending preferably at least partially as far as the radial centre of the fuel cell (1), or the central part of the fuel cell (1) contains a core (46) which comprises a material in such a way that the flow resistance in this part is greater than in the gas channels (15a) in the second cathode layer (15), and the end surface of which on the side of the first end face (4) of the fuel cell (1) is recessed in the axial direction.

15. Fuel cell arrangement according to any one of Claims 8 to 10, **characterized in that** the anode (8) of the pipe wall (2) of the fuel cell (100) faces the inner flow channel (16), and the cathode (12) of the pipe wall (2) faces the outer flow channel (20), with the end face of the anode (8) on the side of the first end face (4) of the pipe wall (2) of the fuel cell (100) forming the first electrical contact area (24) as a contact area for the anode (8), and the end surface of the cathode (12) on the side of the second end face (6) of the pipe wall (2) forming the second electrical contact area (30) as a contact area for the cathode (12).

16. Fuel cell arrangement according to Claim 15, **characterized in that** the second electrical contact area (30) of the fuel cell (100) has an annular layer (28) comprising an electrically conductive material on the second end face (6) of the pipe wall (2), and
**in that** an annular, electrically insulating layer (26) is arranged between the annular layer (28) and the end face of the anode (8) on the side of the second end face (6) of the pipe wall (2).

17. Fuel cell arrangement according to Claim 15 or 16, **characterized in that** the cathode (12) of the pipe wall (2) of the fuel cell (100) has a different composition in the region of the second electrical contact area (30) than in the rest of the region.

18. Fuel cell arrangement according to any one of Claims 15 to 17, **characterized in that** gas channels which form at least part of the outer flow channel pass through the second cathode layer (15) of the fuel cell (100).

19. Fuel cell arrangement according to any one of Claims 8 to 18, **characterized in that** a plurality of fuel cell casings with in each case one fuel cell column and/or a plurality of fuel cell columns are in each case arranged next to one another in the common heat exchanger container such that they form a fuel cell stack arrangement.

20. Fuel cell arrangement according to any one of Claims 8 to 19, **characterized by** a device for centering the fuel cells (1; 100) which are arranged one behind the other, said device having the form of a spacer between the individual fuel cell columns or the form of a spacer from the fuel cell casing (40) and comprising elements (48) formed from solid electrolyte material, in particular integrally with the electrolyte layer (10), which are preferably arranged on the individual fuel cells in the region of the first and/or of the second end face (4, 6).

## Revendications

1. Système de cellules à combustible, avec
au moins une gaine à cellules à combustible (40), étanche aux gaz et aux liquides, à l'intérieur de laquelle une cathode, un électrolyte et une anode de la cellule à combustible (1 ; 100), ainsi que des canaux d'écoulement (16, 15a, 20) pour un fluide d'oxydation (18) et/ou un gaz combustible (22) sont disposés, et
un dispositif pour réguler la température de fonctionnement de la cellule à combustible, comprenant un récipient d'échangeur de chaleur (34), entourant au moins partiellement la gaine à cellules à combustible,
où, dans le récipient d'échangeur de chaleur, circule un fluide caloporteur (38), captant la chaleur de dissipation de la cellule à combustible, à partie de la gaine à cellules à combustible servant de surface d'échangeur de chaleur.

2. Système de cellules à combustible selon la revendication 1, **caractérisé en ce que** le fluide caloporteur fournit la chaleur de dissipation, captée par la gaine à cellules à combustible, dans un puits de chaleur et, partiellement à des zones plus froides de la gaine à cellules à combustible.

3. Système de cellules à combustible selon la revendication 1 ou 2, **caractérisé en ce que**, pendant le transport de chaleur, le fluide caloporteur subit un changement de phase, le fluide caloporteur captant, par évaporation, la chaleur de dissipation provenant de la gaine à cellules à combustible et la refournissant, par condensation, dans des zones plus froides (puits de chaleur) du récipient d'échangeur de chaleur, et le récipient d'échangeur de chaleur faisant partie d'un dispositif à caloducs.

4. Système de cellules à combustible selon l'une des revendications 1 à 3, **caractérisé en ce que** la gaine à cellules à combustible est munie, sur sa face extérieure, au moins partiellement d'une structure capillaire (42).

5. Système de cellules à combustible selon l'une des revendications 1 à 4, **caractérisé en ce que** la gaine à cellules à combustible est de forme tubulaire et présente une première et une deuxième face frontale, au moins l'une, de la première et de la deuxième face frontale, de la gaine à cellules à combustible ressortant du récipient d'échangeur de chaleur.

6. Système de cellules à combustible selon l'une des revendications 1 à 5, **caractérisé en ce qu'**une pluralité de cellules à combustible, avec la gaine à cellules à combustible, sont disposées dans un récipient d'échangeur de chaleur commun, ou une pluralité de gaines à cellules à combustible, avec chaque fois au moins une cellule à combustible, sont disposées dans le récipient d'échangeur de chaleur commun.

7. Système de cellules à combustible selon l'une des revendications 1 à 6, **caractérisé en ce qu'**une pluralité de cellules à combustible sont disposées, dans une gaine à cellules à combustible, chaque fois les unes derrière les autres en série dans le récipient d'échangeur de chaleur commun, de manière à former une colonne de cellules à combustible (32), un dispositif (36) étant prévu, pour solliciter par une pression mécanique les cellules à combustible disposées les unes derrière les autres.

8. Système de cellules à combustible selon la revendication 7, **caractérisé en ce que** la cellule à combustible (1 ; 100) est de forme tubulaire ou en forme de barre et présente :
une première et une deuxième face frontale (4, 6) ;
une paroi tubulaire (2) s'étendant entre les deux faces frontales (4, 6) ;
une cathode (12) et une anode (8), s'étendant chaque fois en forme d'enveloppe dans la paroi tubulaire (2), avec un électrolyte solide (10) en position intermédiaire ;
un canal d'écoulement intérieur (16) pour un fluide d'oxydation (18) ou un gaz combustible (22) ; et
un canal d'écoulement extérieur (20), entourant la paroi tubulaire (2), pour du gaz combustible (22) ou un fluide d'oxydation (18) ; où
sur la première face frontale (4) est disposée une première face de contact électrique (24) plane, s'étendant en direction radiale, pour la mise en contact électrique d'une, de la cathode (12) et de l'anode (8) ;
sur la deuxième face frontale (6) est disposée une deuxième face de contact électrique (30) plane, s'étendant en direction radiale, pour la mise en contact électrique de l'autre, de la cathode (12) et de l'anode (8) ;
les faces de contact électrique (24, 30) présentent chacune au moins une ouverture pour le canal d'écoulement intérieur (16), et les faces de contact électrique (24, 30) de cellules à combustible (1, 100) voisines sont situées les unes au-dessus des autres, et les canaux d'écoulement forment un ou plusieurs canaux d'écoulement intérieur (16) commun pour un fluide d'oxydation/gaz combustible (18, 22) et un canal d'écoulement extérieur (20) commun pour du gaz combustible/fluide d'oxydation (22, 18).

9. Système de cellules à combustible selon la revendication 8, **caractérisé en ce que** les faces de contact électrique (24, 30) sont polies, de manière à améliorer l'étanchéité du canal d'écoulement intérieur par rapport au canal d'écoulement extérieur (16, 20).

10. Système de cellules à combustible selon la revendication 8 ou 9, **caractérisé en ce que** l'épaisseur de couche de la cathode (12) de la cellule à combustible (1, 100), en direction radiale, est notablement plus grande que l'épaisseur de couche de l'anode (8) de celle-ci, sachant que, de préférence, l'épaisseur de couche de la cathode (12) de la cellule à combustible (1, 100), fait au moins 10 %, de préférence de 20 % à 60 % et, en particulier de 30 % à 50 % du rayon de la cellule à combustible (1, 100) en forme de tube.

11. Système de cellules à combustible selon l'une des revendications 8 à 10, **caractérisé en ce que** la cathode (12) forme une couche intérieure de la paroi tubulaire (2) et, en particulier, est tournée vers le canal d'écoulement intérieur (16), et l'anode (8) forme une couche extérieure de la paroi tubulaire (2) et est tournée vers le canal d'écoulement extérieur (20), la face frontale de la cathode (12), sur le côté de la première face frontale (4) de la paroi tubulaire (2) de la cellule à combustible (1), forme la première face de contact électrique (24), en tant que face de contact pour la cathode (12), et la face frontale de l'anode (8), sur le côté de la deuxième face frontale (6) de la paroi tubulaire (2) de la cellule à combustible (1), forme la deuxième face de contact électrique (30), en tant que face de contact pour l'anode (8).

12. Système de cellules à combustible selon la revendication 11, **caractérisé en ce que** la deuxième face de contact électrique (30) de la cellule à combustible (1), sur la deuxième face frontale (6) de la paroi tubulaire (2), présente une couche (28) en forme d'anneau, composée d'un matériau conducteur de l'électricité, et
**en ce qu'**une couche (26) conductrice de l'électricité, en forme d'anneau, en particulier formée d'un matériau électrolyte, est disposée entre la couche (28) en forme d'anneau et la face frontale de la cathode (12), sur le côté de la deuxième face frontale (6) de la paroi tubulaire (2).

13. Système de cellules à combustible selon la revendication 11 ou 12, **caractérisé en ce que**, dans la zone de la première face de contact électrique (24) et dans la zone restante, la cathode (12) présente une composition différente.

14. Système de cellules à combustible selon l'une des revendications 11 à 13, **caractérisé en ce que** la deuxième couche de cathode (15) de la cellule à combustible (1) est traversée par des canaux à gaz (15a) formant au moins une partie du canal d'écoulement intérieur, la deuxième couche de cathode (15) de la cellule à combustible (1) arrivant de préférence au moins partiellement jusqu'au centre radial de la cellule à combustible (1) ou la partie centrale de la cellule à combustible (1) contient un noyau (46), composé d'un matériau tel que la résistance à l'écoulement dans cette partie soit plus grande que ce qu'elle est dans les canaux à gaz (15a) dans la deuxième couche de cathode (15), et dont la face frontale, sur le côté de la première face frontale (4) de la cellule à combustible (1), est en retrait en direction axiale.

15. Système de cellules à combustible selon l'une des revendications 8 à 10, **caractérisé en ce que** l'anode (8) de la paroi tubulaire (2) de la cellule à combustible (100) est tournée vers le canal d'écoulement intérieur (16), et la cathode (12) de la paroi tubulaire (2) est tournée vers le canal d'écoulement extérieur (20), la face frontale de l'anode (8), sur le côté de la première face frontale (4) de la paroi tubulaire (2) de la cellule à combustible (100), forme la première face de contact électrique (24), en tant que face de contact pour l'anode (8), et la face frontale de la cathode (12), sur le côté de la deuxième face frontale (6) de la paroi tubulaire (2), forme la deuxième face de contact électrique (30), en tant que face de contact pour la cathode (12).

16. Système de cellules à combustible selon la revendication 15, **caractérisé en ce que** la deuxième face de contact électrique (30) de la cellule à combustible (100) présente, sur la deuxième face frontale (6) de la paroi tubulaire (2), une couche (28) en forme d'anneau, composée d'un matériau conducteur de l'électricité, et
**en ce qu'**une couche (26) isolant de l'électricité, en forme d'anneau, en particulier formée d'un matériau électrolyte solide, est disposée entre la couche (28) en forme d'anneau et la face frontale de l'anode (8), sur le côté de la deuxième face frontale (6) de la paroi tubulaire (2).

17. Système de cellules à combustible selon la revendication 15 ou 16, **caractérisé en ce que** la cathode (12) de la paroi tubulaire (2) de la cellule à combustible (100), dans la zone de la deuxième face de contact électrique (30) et dans la zone restante, présente une composition différente.

18. Système de cellules à combustible selon l'une des revendications 15 à 17, **caractérisé en ce que** la deuxième couche de cathode (15) de la cellule à combustible (100) est traversée par des canaux à gaz formant au moins une partie du canal d'écoulement extérieur.

19. Système de cellules à combustible selon l'une des revendications 8 à 18, **caractérisé en ce qu'**une pluralité de gaines à cellules à combustible avec chaque fois une colonne de cellules à combustible et/ou une pluralité de colonnes de cellules à combustibles sont chaque fois disposées les unes à côté des autres dans le récipient d'échangeur de chaleur commun, de manière qu'elles forment un agencement à empilement de cellules à combustible.

20. Système de cellules à combustible selon l'une des revendications 8 à 19, **caractérisé par** un dispositif de centrage des cellules à combustible (1 ; 100) disposées les unes derrière les autres, réalisé sous forme de support d'espacement entre les différentes colonnes de cellules à combustibles ou de support d'espacement par rapport à la gaine à cellules à combustible (40), et comprenant des éléments (48) disposés de préférence sur les différentes cellules à combustible, dans la zone de la première et/ou de la deuxième face frontale (4, 6), réalisés en matériau électrolyte solide, en particulier d'une seul pièce avec la couche d'électrolyte (10).
